# EUROPEAN PATENT SPECIFICATION

(11) **EP 4 269 779 B1**
(45) Date of publication and mention of the grant of the patent: **14.05.2025**
(21) Application number: 21914026.6
(22) Date of filing: 21.12.2021
(51) Int. Cl.: F02M 37/00, F02M 21/02, F02M 33/02

(54) **MARINE LIQUID AMMONIA FUEL SUPPLY AND FUEL RECYCLING SYSTEM**
ZUFUHR VON FLÜSSIGEM AMMONIAKBRENNSTOFF AUF SEE UND BRENNSTOFFRECYCLINGSYSTEM
SYSTÈME D'ALIMENTATION EN CARBURANT AMMONIAC LIQUIDE MARITIME ET DE RECYCLAGE DE CARBURANT

(30) Priority: 28.12.2020 CN 202011579030
(43) Date of publication of application: 01.11.2023
(73) Proprietor: Dalian Shipbuilding Industry Co. Ltd, Dalian, Liaoning 116021 (CN)
(72) Inventor: PIAN, Chengrong, Dalian, Liaoning 116021 (CN); GUAN, Yinghua, Dalian, Liaoning 116021 (CN); ZHANG, Yiming, Dalian, Liaoning 116021 (CN); JI, Zhiyong, Dalian, Liaoning 116021 (CN); LI, Da, Dalian, Liaoning 116021 (CN); HAN, Wei, Dalian, Liaoning 116021 (CN); SUN, Qiang, Dalian, Liaoning 116021 (CN); WU, Nan, Dalian, Liaoning 116021 (CN); LV, Yan, Dalian, Liaoning 116021 (CN); QU, Lili, Dalian, Liaoning 116021 (CN); LEI, Lei, Dalian, Liaoning 116021 (CN); ZHANG, Lintao, Dalian, Liaoning 116021 (CN); PENG, Dongsheng, Dalian, Liaoning 116021 (CN); YANG, Yang, Dalian, Liaoning 116021 (CN); GUO, Qiang, Dalian, Liaoning 116021 (CN); PAN, Shuai, Dalian, Liaoning 116021 (CN); SUN, Kaiqiang, Dalian, Liaoning 116021 (CN)
(74) Representative: Scholl, Matthias
(86) International application number: PCT/CN2021/139957
(87) International publication number: WO 2022/143287

(56) References cited:
- EP-A1- 2 378 094
- EP-A1- 4 316 971
- EP-A1- 4 335 741
- WO-A1-2023/058407
- WO-A1-2023/120031
- CN-A- 110 582 632
- CN-A- 110 831 850
- CN-A- 112 696 289
- CN-A- 113 202 638
- CN-A- 113 719 385
- CN-A- 113 719 385
- CN-U- 203 162 531
- CN-U- 211 924 353
- CN-U- 214 533 292
- CN-U- 215 195 849
- DK-A1- 202 170 273
- KR-A- 20220 159 900
- US-A1- 2014 311 445

## Description

### BACKGROUND

The disclosure relates to the field of ship design and construction, and more particularly, to a liquid ammonia supply and recovery system.

The current global climate crisis is exacerbating, resulting in frequent extreme weather events and natural disasters worldwide. The primary culprit is the emission of greenhouse gases, particularly CO₂. The International Maritime Organization (IMO) has adopted measures to reduce carbon intensity of all ships by 40% by 2023 and 70% by 2050, compared to 2008. Meeting these targets will necessitate higher standards for ship design, equipment, and the application of cutting-edge technologies.

Ammonia (-33.6°C, 1 atm, liquid) is a chemical raw material utilized extensively in various fields, including chemical medicine, pesticides, national defense, and metallurgy. On land, ammonia is frequently stored and transported as a liquid and has well-established applications. Additionally, ammonia can serve as a clean fuel source by burning it, which results in only nitrogen and water without any carbon emissions.

In marine applications, ammonia is stored as a liquid to conserve fuel storage space. Different tanks, with varying volumes, types, and design pressures, are utilized based on the ship's size, type, and endurance requirements. Typically, these tanks are categorized into semi-refrigerated and semi-pressurized types (a type-C tank, with a design temperature of - 40°C and a design pressure of 4-10 barg) and full-refrigerated types (a type-A, type-B, or membrane tank, with a design temperature of -40°C and a design pressure of ≤ 0.7 barg).

The German MAN Group is presently developing a dual-fuel, low-speed main engine that can operate on liquid ammonia. The main engine injects liquid ammonia with a pressure of ≥70 bar into a cylinder for combustion. To achieve the most effective performance, the fuel temperature must be maintained within a range of 45 ± 10°C. By incorporating this engine model into ships, "zero-carbon" emissions is achieved from a main propulsion network, rendering it environmentally valuable. However, unused liquid ammonia fuel may be returned through a reflux pipeline due to changes in the engine load during fuel delivery. Directly releasing the leftover fuel into the atmosphere would lead to fuel waste and safety risks.

The document EP 2 378 094 A1 presents a state of the art internal combustion engines running ammonia as fuel.

To utilize liquid ammonia as a ship propulsion fuel, a liquid ammonia supply and recovery system must be developed, which meets the flow rate, temperature, and pressure requirements of an ammonia-fueled engine while also addressing the reflux and recovery of liquid ammonia.

To solve the aforesaid problems, the disclosure provides a liquid ammonia supply and recovery system to provide a green liquid ammonia fuel to ships, and to maximize the recovery and utilization of liquid ammonia in the ship's operation process, thus avoiding fuel waste and safety hazards caused by direct ammonia emissions to the atmosphere.

The technical solution of the disclosure is as follows:
A liquid ammonia supply and recovery system, comprises an ammonia -fueled engine, a liquid ammonia supply system, a liquid ammonia recovery system, and a nitrogen purging system.

The liquid ammonia supply system comprises a liquid ammonia tank used to store liquid ammonia; a low-pressure pump is disposed in the liquid ammonia tank and connected to a buffer tank through a first supply pipeline; the liquid ammonia is pumped out of the liquid ammonia tank by the low-pressure pump, directed to flow through the first supply pipeline and into the buffer tank, pumped out of the buffer tank by a high-pressure pump, directed to flow through a liquid ammonia heater, a liquid ammonia filter, a main gas valve, at least two supply valves, and a second supply pipeline, subsequently, and flows into an ammonia-fueled engine.

The liquid ammonia recovery system comprises at least two reflux valves, a liquid ammonia collection tank, a first reflux pipeline, and a second reflux pipeline; the ammonia-fueled engine comprises a liquid ammonia outlet connected to the at least two reflux valves through the first reflux pipeline; one end of the second reflux pipeline is connected to the at least two reflux valves; the other end of the second reflux pipeline is connected to the liquid ammonia collection tank and the buffer tank through a first valve and a second valve, respectively; the liquid ammonia collection tank and the buffer tank are connected through a third reflux pipeline and a third valve.

The nitrogen purging system comprises a gas-liquid separator, a vent mast, a first purging pipeline and a second purging pipeline; an external purging inlet is disposed on the at least two reflux valves and the at least two reflux valves are connected to the gas-liquid separator and the vent mast through the first purging pipeline and a fourth valve; a top part of the liquid ammonia collection tank is connected to the gas-liquid separator and the vent mast through the second purging pipeline and a fifth valve; and a nitrogen purging inlet is connected to the second supply pipeline.

When the liquid ammonia supply and recovery system stops running normally (specifically, the liquid ammonia supply system and the ammonia-fueled engine stop running normally), the liquid ammonia retained in the second supply pipeline, the first reflux pipeline, and the second reflux pipeline is released into the liquid ammonia collection tank by the nitrogen purging system; the ammonia gas retained in the second supply pipeline and the first reflux pipeline is released into the gas-liquid separator and then discharged into the atmosphere through the vent mast.

A first liquid level gauge is disposed on the liquid ammonia collection tank; when a set liquid ammonia level is reached in the liquid ammonia collection tank, the third valve is opened, and the liquid ammonia in the liquid ammonia collection tank flows through the third reflux pipeline into the buffer tank.

The buffer tank is used to continuously supply the liquid ammonia to the high-pressure pump, ensuring the suction head of the high-pressure pump, while also allowing for the recovery and storage of reflux of liquid ammonia; a second liquid level gauge is disposed on the buffer tank to measure the liquid ammonia level in the buffer tank.

The liquid ammonia supply and recovery system further comprises a water-glycol heating system; the water-glycol heating system comprises a water-glycol heater and a water-glycol circulation pump; the heat is produced by a jacket water heater, transferred through the water-glycol heater and the water-glycol circulation pump, and transferred to a water-glycol heat transfer medium in the liquid ammonia heater. Specifically, the liquid ammonia heater uses the water-glycol heat transfer medium for heat exchange; the water-glycol heat transfer medium absorbs the heat produced by the jacket water heater and transfers the heat to the liquid ammonia heater; the liquid ammonia heater releases cold energy to the water-glycol heat transfer medium; the cold water-glycol heat transfer medium flows back to the jacket water heater to absorb heat energy and transfers the heat energy to the liquid ammonia heater.

The nitrogen purging inlet provides nitrogen pressure of greater than 25 bar, and a dew point of nitrogen to meet the requirements of the ammonia-fueled engine.

The liquid ammonia is pressurized to 18 bar by the low-pressure pump and flows into the buffer tank; the number of the low-pressure pump is one or more; the high-pressure pump increase the pressure of the liquid ammonia to ≥70 bar; the number of the high-pressure pump is one or more; the liquid ammonia heater is configured to heat the liquid ammonia to a temperature of 45±10°C; the ammonia-fueled engine is configured to provide power for ship propulsion with the liquid ammonia at a pressure of ≥70 bar and a temperature of 45±10°C.

The main gas valve is disposed between the liquid ammonia filter and the at least two supply valves; when the liquid ammonia supply and recovery system stops running, the main gas valve is closed, so that the high-pressure pump is separated from the at least two supply valves, the at least two reflux valves, and the ammonia-fueled engine.

The at least two supply valves and the at least two reflux valves are used to adjust the pressure of the liquid ammonia, or to ensure the safety of the ammonia-fueled engine during a shutdown process of the liquid ammonia supply system and the liquid ammonia recovery system.

The liquid ammonia tank is used to contain the liquid ammonia at a temperature of -33.6°C; and the liquid ammonia tank is a type-C pressure tank, a type-A pressure tank, a type-B pressure tank, or a membrane tank.

The liquid ammonia is filtered by the liquid ammonia filter to meet the requirements of fuel quality.

The gas-liquid separator is used to separate liquid ammonia, ammonia, nitrogen, and oil to ensure that only gases are released into the atmosphere through the vent mast.

The following advantages are associated with the liquid ammonia supply and recovery system: the high-pressure pump increases the pressure of the liquid ammonia to a pressure of ≥70 bar and the liquid ammonia heating system heats the liquid ammonia to a temperature of 45±10°C to allow the ammonia-fueled engine to provide power for ship propulsion; and the liquid ammonia retained in the pipelines is recovered, which reduces the amount of the liquid ammonia released into the atmosphere, contributing to the safety of personnel and ship.

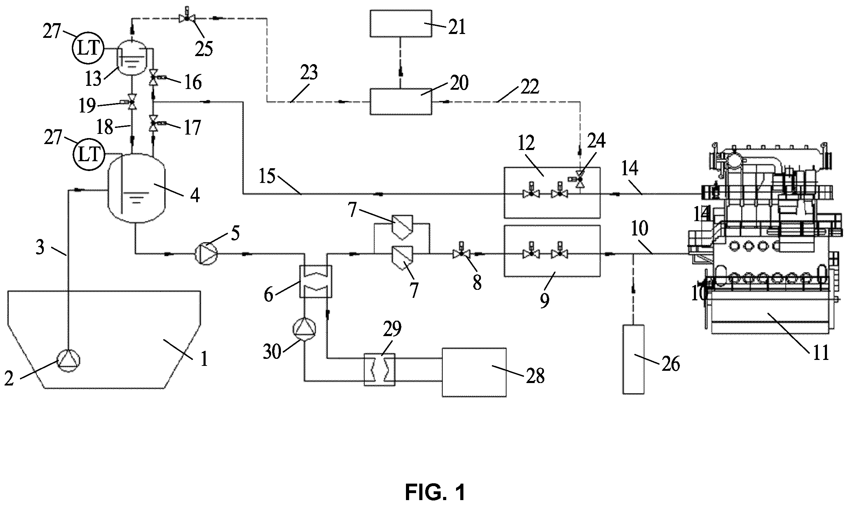

FIG. 1 is a perspective view of a liquid ammonia supply and recovery system according to one embodiment of the disclosure.

In the drawings, the following reference numbers are used: 1. Liquid ammonia tank; 2. Low-pressure pump; 3. First supply pipeline; 4. Buffer tank; 5. High-pressure pump; 6. Liquid ammonia heater; 7. Liquid ammonia filter; 8. Main gas valve; 9. Supply valve; 10. Second supply pipeline; 11. Ammonia-fueled engine; 12. Reflux valve; 13. Liquid ammonia collection tank; 14. First reflux pipeline; 15. Second reflux pipeline; 16. First valve; 17. Second valve; 18. Third reflux pipeline; 19. Third valve; 20. Gas-liquid separator; 21. Vent mast; 22. First purging pipeline; 23. Second purging pipeline; 24. Fourth valve; 25. Fifth valve; 26. Nitrogen purging inlet; 27. Second liquid level gauge; 28. Jacket water heater; 29. Water-glycol heater; and 30. Water-glycol circulation pump.

### Example 1

A liquid ammonia supply and recovery system for a ship comprises an ammonia-fueled engine 11, a liquid ammonia supply system, a liquid ammonia recovery system, a nitrogen purging system, and a water-glycol heating system.

The liquid ammonia supply system comprises a liquid ammonia tank 1 used to store liquid ammonia; a low-pressure pump 2 is disposed in the liquid ammonia tank 1 and connected to a buffer tank 4 through a first supply pipeline 3; an ammonia-fueled engine 11 comprises a liquid ammonia inlet connected to at least two supply valves 9 through a second supply pipeline 10; the liquid ammonia is pumped out of the liquid ammonia tank 1 by the low-pressure pump 2, directed to flow through the first supply pipeline 3 into the buffer tank 4, pumped out of the buffer tank 4 by a high-pressure pump 5, directed to flow through a liquid ammonia heater 6, a liquid ammonia filter 7, a main gas valve 8, the at least two supply valves 9 and a second supply pipeline 10, subsequently, and flows into the ammonia-fueled engine 11.

The liquid ammonia recovery system comprises at least two reflux valves 12, a liquid ammonia collection tank 13, a first reflux pipeline 14, and a second reflux pipeline 15; the ammonia-fueled engine 11 comprises a liquid ammonia outlet connected to the at least two reflux valves 12 through the first reflux pipeline 14; one end of the second reflux pipeline 15 is connected to the at least two reflux valves 12; the other end of the second reflux pipeline 15 is connected to the liquid ammonia collection tank 13 and the buffer tank 4 through a first valve 16 and a second valve 17, respectively; the liquid ammonia collection tank 13 and the buffer tank 4 are connected through a third reflux pipeline 18 and a third valve 19.

The nitrogen purging system comprises a gas-liquid separator 20, a vent mast 21, a first purging pipeline 22 and a second purging pipeline 23; an external purging inlet is disposed on the at least two reflux valves 12 and the at least two reflux valves are connected to the gas-liquid separator 20 and the vent mast 21 through the first purging pipeline 22 and a fourth valve 24; a top part of the liquid ammonia collection tank 13 is connected to the gas-liquid separator and the vent mast 21 through the second purging pipeline 23 and a fifth valve 25; and a nitrogen purging inlet 26 is connected to the second supply pipeline 10.

The water-glycol heating system comprises a water-glycol heater 29 and a water-glycol circulation pump 30; the heat is produced by a jacket water heater 28, transferred through the water-glycol heater 29 and the water-glycol circulation pump 30, and transferred to a water-glycol heat transfer medium in the liquid ammonia heater 6.

A second liquid level gauge 27 is disposed on the buffer tank 4 to measure the liquid level in the buffer tank 4.

A first liquid level gauge 27 is disposed on the liquid ammonia collection tank 13; when a set liquid ammonia level is reached in the liquid ammonia collection tank 13 reaches a set liquid level, the third valve 19 is opened, and the liquid ammonia in the liquid ammonia collection tank 13 flows through the third reflux pipeline 18 into the buffer tank 4.

The liquid ammonia supply and recovery system is operated as follows:
Before the liquid ammonia supply and recovery system starts operating:
The main gas valve 8, the at least two supply valves 9, the at least two reflux valves 12, the low-pressure pump 2, the high-pressure pump 5, and the water-glycol circulation pump 30 are closed; and the fourth valve 24 is opened; the nitrogen is introduced into the nitrogen purging inlet 26 and blows the impurities out of the second supply pipeline 10 and the first reflux pipeline 14; the impurities passes through the first purging pipeline 22 and the gas-liquid separator 20, and is released into the atmosphere through the vent mast 21; the gas-liquid separator 20 is used to divide the impurities into liquid ammonia, ammonia, nitrogen, and oil, so that only gases are discharged into the atmosphere through the vent mast 21; optionally, the ammonia discharged by the gas-liquid separator 20 is absorbed, and the remaining gas is discharged into the atmosphere through the vent mast 21; subsequently, the water-glycol circulation pump 30 is started, so that the water and glycol continuously circulate through the liquid ammonia heater 6.

The liquid ammonia supply and recovery system starts operating:

When the nitrogen purging system is turned off and the fourth valve 24 are closed, the liquid ammonia supply and recovery system starts running.

The low-pressure pump 2 is turned on; when a set liquid ammonia level is reached in the buffer tank 4, the high-pressure pump 5, the main gas valve 8, the at least two supply valves 9, the at least two reflux valves 12, the first valve 16, the third valve 19, and the fifth valve 25 are opened.

The liquid ammonia in the liquid ammonia tank 1 is pressurized by the low-pressure pump 2 and flows through the first supply pipeline 3 into the buffer tank 4; the high-pressure pump 5 increases the pressure of the liquid ammonia to 70 bar; subsequently, the liquid ammonia is heated to a temperature of 45 ± 10°C by the liquid ammonia heater 6, filtered by the liquid ammonia filter 7, and supplied to the ammonia-fueled engine 11 through the main gas valve 8, the at least two supply valves 9, and the second supply pipeline 10.

As the liquid ammonia fills the pipelines, the nitrogen from the second supply pipeline 10 and the first reflux pipeline 14 is discharged into the liquid ammonia collection tank 13 through the second reflux pipeline 15 and the first valve 16, flows through the five valve 25 and the gas-liquid separator 20, and is discharged into the atmosphere by the vent mast 21.

The liquid ammonia in the liquid ammonia collection tank 13 flows into the buffer tank 4 through the third valve 19; the fifth valve 25 is adjusted to ensure that the pressure in the liquid ammonia collection tank 13 is greater than that in the buffer tank 4, allowing the liquid ammonia to flow smoothly into the buffer tank 4.

The liquid ammonia supply and recovery system operates normally:
The first valve 16, the third valve 19, the fourth valve 24, and the fifth valve 25 are closed, and the second valve 17 is opened; and the liquid ammonia flowing from the ammonia-fueled engine enters the buffer tank 4 through the second valve 17.

The liquid ammonia supply and recovery system stops operating normally.

When the liquid ammonia supply and recovery system stops operating normally, the main gas valve 8 and the at least two supply valves 9 are closed to shut off the fuel supply, and the at least two reflux valves 12 stay open; as the main gas valve is automatically closed, the high-pressure pump 5 and the liquid ammonia heater 6 are separated from the at least two supply valves 9, the at least two reflux valves 12, and the ammonia-fueled engine 11.

The second valve 17, the third valve 19, and the fourth valve 24 are closed, and the first valve 16 and the fifth valve 25 are opened; some of the liquid ammonia flows into the liquid ammonia collection tank 13 through the second supply pipeline 10, the first reflux pipeline 14, and the second reflux pipeline 15, so that the pressure in the pipelines is decreased; the nitrogen is introduced into the nitrogen purging inlet 26 to blow the remaining liquid ammonia out of the second supply pipeline 10, the first reflux pipeline 14, and the second reflux pipeline 15 and into the liquid ammonia collection tank 13; subsequently, the nitrogen in the liquid ammonia collection tank 13 is discharged through the fifth valve 25 and the second purging pipeline 23 into the gas-liquid separator 20 and the vent mast 21; the gas-liquid separator 20 is used to divide the mixture into liquid ammonia, ammonia gas, nitrogen gas, and oil, so that only gases are discharged into the atmosphere through the vent mast 21; optionally, the ammonia released by the gas-liquid separator 20 is absorbed, and the remaining gas is discharged through the vent mast 21 into the atmosphere.

When the first liquid level gauge 27 monitors a desired liquid level in the liquid ammonia collection tank 13, the third valve 19 is opened, and the liquid ammonia in the liquid ammonia collection tank 13 flows through the third reflux pipeline 18 into the buffer tank 4.

When no liquid ammonia is detected in the second supply pipeline 10 and the first reflux pipeline 14, the fifth valve 25 is closed; and the reflux valve assembly 12 is closed, so that the first reflux pipeline 14 is separated from the second supply pipeline 15; the fourth valve 24 is opened, and a small amount of ammonia retained in the second supply pipeline 10 and the first reflux pipeline 14 flows through the first purging pipeline 22 to the gas-liquid separator 20 and is released into the atmosphere through the vent mast 21; in the gas-liquid separator, impurities such as liquid ammonia, ammonia, nitrogen, and oil are divided to ensure that only gases are released into the atmosphere through the vent mast 21, optionally, the ammonia discharged from the gas-liquid separator 20 is absorbed, and the remaining gas is released into the atmosphere through the vent mast 21.

5. The liquid ammonia supply and recovery system is shut down in an emergency.

When an emergency such as ammonia leakage, fire, or equipment failure occurs, the liquid ammonia supply and recovery system is shut down immediately, and the reflux of the liquid ammonia is stopped in the first supply pipeline, the second supply pipeline, the first reflux pipeline, and the second reflux pipeline; the main gas valve 8, the at least two supply valves 9, and at least two reflux valves 12 are immediately closed; the second valve 17, third valve 19, and fifth valve 25 are then closed; and the first valve 16 and the fourth valve 24 are opened; the liquid ammonia retained in the second reflux pipeline 15 flows into the liquid ammonia collection tank 13 through the first valve 16; the liquid ammonia retained in the second supply pipeline 10 and the first reflux pipeline 14 flows to the gas-liquid separator 20 through the fourth valve 24 and the first purging pipeline 22, and is immediately released into the atmosphere through the vent mast 21; after the pressure in the pipelines is decreased, the nitrogen is introduced into the nitrogen purging inlet 26 to flow through the second supply pipeline 10 and the first reflux pipeline 14, and the residual liquid ammonia and ammonia gas are eliminated from the first purging pipeline 22 to the gas-liquid separator 20, and are released into the atmosphere through the vent mast 21; in the gas-liquid separator divides the impurities into liquid ammonia, ammonia, nitrogen, and oil to ensure that only gas is released into the atmosphere through the vent mast 21, optionally, the ammonia discharged from the gas-liquid separator 20 is absorbed, and the remaining gas is released into the atmosphere through the vent mast 21.

When the first liquid level gauge 27 monitors a desired liquid level, the third valve 19 is opened, and the liquid ammonia in the liquid ammonia collection tank 13 flows through the third reflux pipeline 18 into the buffer tank 4.

## Claims

1. A liquid ammonia supply and recovery system comprising
an ammonia -fueled engine (11) and a liquid ammonia supply system,
**characterised in that** it comprises furthermore a liquid ammonia recovery system and a nitrogen purging system; wherein
the liquid ammonia supply system comprises a liquid ammonia tank (1) used to store liquid ammonia; a low-pressure pump (2) is disposed in the liquid ammonia tank (1) and connected to a buffer tank (4) through a first supply pipeline (3); the liquid ammonia is pumped out of the liquid ammonia tank (1) by the low-pressure pump (2), directed to flow through the first supply pipeline (3) and into the buffer tank, pumped out of the buffer tank by a high-pressure pump (5), directed to flow through a liquid ammonia heater (6), a liquid ammonia filter (7), a main gas valve (8), at least two supply valves (9), and a second supply pipeline (10) subsequently, and flows into an ammonia-fueled engine (11);
the liquid ammonia recovery system comprises at least two reflux valves (12), a liquid ammonia collection tank (13), a first reflux pipeline (14), and a second reflux pipeline (15); the ammonia-fueled engine (11) comprises a liquid ammonia outlet connected to the at least two reflux valves (12) through the first reflux pipeline (14); one end of the second reflux pipeline (15) is connected to the at least two reflux valves (12), and the other end of the second reflux pipeline (15) is connected to the liquid ammonia collection tank (13) and the buffer tank (4) through a first valve (16) and a second valve (17), respectively; the liquid ammonia collection tank (13) and the buffer tank (4) are connected through a third reflux pipeline (18) and a third valve (19); and
the nitrogen purging system comprises a gas-liquid separator (20), a vent mast (21), a first purging pipeline (22) and a second purging pipeline (23); an external purging inlet is disposed on the at least two reflux valves (12) and the at least two reflux valves are connected to the gas-liquid separator (20) and the vent mast (21 through the first purging pipeline (22) and a fourth valve (24); a top part of the liquid ammonia collection tank (13) is connected to the gas-liquid separator (20) and the vent mast (21) through the second purging pipeline (23) and a fifth valve (25); and a nitrogen purging inlet (26) is connected to the second supply pipeline (10).

2. The liquid ammonia supply and recovery system of claim 1, **characterized in that** when the liquid ammonia supply and recovery system stops running normally, the liquid ammonia retained in the second supply pipeline (10), the first reflux pipeline (14), and the second reflux pipeline (15) is released into the liquid ammonia collection tank (13) by the nitrogen purging system; the ammonia gas retained in the second supply pipeline (10) and the first reflux pipeline (14) is released into the gas-liquid separator (20) and then discharged into the atmosphere through the vent mast (21).

3. The liquid ammonia supply and recovery system of claim 1, **characterized in that** a first liquid level gauge (27) is disposed on the liquid ammonia collection tank (13); when a set liquid ammonia level is reached in the liquid ammonia collection tank (13), the third valve (19) is opened, and the liquid ammonia in the liquid ammonia collection tank flows through the third reflux pipeline (18) into the buffer tank.

4. The liquid ammonia supply and recovery system of claim 1, **characterized in that** the buffer tank (4) is provided with a second liquid level gauge (27).

5. The liquid ammonia supply and recovery system of claim 1, **characterized in that** the liquid ammonia supply and recovery system further comprises a water-glycol heating system; the water-glycol heating system comprises a water-glycol heater (29) and a water-glycol circulation pump (30); the heat is produced by a jacket water heater (28), transferred through the water-glycol heater (29) and the water-glycol circulation pump (30), and transferred to a water-glycol heat transfer medium in the liquid ammonia heater (6).

6. The liquid ammonia supply and recovery system of claim 1, **characterized in that** during normal operation of the system, the first valve (16) is closed and the second valve (17) is opened; the liquid ammonia is delivered to the ammonia-fueled engine (11) through the second supply pipeline (10); the liquid ammonia returned by the ammonia-fueled engine (11) is directly returned to the buffer tank (4) through the first reflux pipeline (14) and the second reflux pipeline (15).

7. The liquid ammonia supply and recovery system of claim 1, **characterized in that** the liquid ammonia tank (1) is a type-C pressure tank, a type-A pressure tank, a type-B pressure tank, or a membrane tank, and is one or more in number.

8. The liquid ammonia supply and recovery system of claim 1, **characterized in that** the nitrogen purging inlet (26) provides nitrogen pressure of greater than 25 bar.

9. The liquid ammonia supply and recovery system of claim 1, **characterized in that** a number of the low-pressure pump (2) in each liquid ammonia tank (1) is one or more; and a number of the high-pressure pump (5) is one or more.

10. The liquid ammonia supply and recovery system of claim 1, **characterized in that** the gas-liquid separator (20) is disposed at an upsteam of the vent mast (21).

## Patentansprüche

1. Flüssigammoniakzufuhr- und -rückgewinnungssystem, umfassend einen ammoniakbetriebenen Motor (11) und ein Flüssigammoniakzufuhrsystem, **dadurch gekennzeichnet, dass** es ferner ein Flüssigammoniakrückgewinnungssystem und ein Stickstoffspülsystem umfasst; wobei
das Flüssigammoniakzufuhrsystem einen Flüssigammoniakbehälter (1) umfasst, der zum Speichern von Flüssigammoniak verwendet wird; eine Niederdruckpumpe (2) in dem Flüssigammoniakbehälter (1) angeordnet und durch eine erste Zufuhrleitung (3) mit einem Pufferbehälter (4) verbunden ist; das flüssige Ammoniak durch die Niederdruckpumpe (2) aus dem Flüssigammoniakbehälter (1) gepumpt wird, so geleitet wird, dass es durch die erste Zufuhrleitung (3) und in den Pufferbehälter strömt, durch eine Hochdruckpumpe (5) aus dem Pufferbehälter gepumpt wird, so geleitet wird, dass es durch eine Flüssigammoniakheizung (6), einen Flüssigammoniakfilter (7), ein Hauptgasventil (8), mindestens zwei Zufuhrventile (9) und eine zweite Zufuhrleitung (10) strömt, und anschließend in einen ammoniakbetriebenen Motor (11) strömt;
das Flüssigammoniakrückgewinnungssystem mindestens zwei Rücklaufventile (12), einen Flüssigammoniaksammelbehälter (13), eine erste Rücklaufleitung (14) und eine zweite Rücklaufleitung (15) umfasst; der ammoniakbetriebenen Motor (11) einen Flüssigammoniakauslass umfasst, der mit den mindestens zwei Rücklaufventilen (12) durch die erste Rücklaufleitung (14) verbunden ist; ein Ende der zweiten Rücklaufleitung (15) mit den mindestens zwei Rücklaufventilen (12) verbunden ist und das andere Ende der zweiten Rücklaufleitung (15) durch ein erstes Ventil (16) beziehungsweise ein zweites Ventil (17) mit dem Flüssigammoniaksammelbehälter (13) und dem Pufferbehälter (4) verbunden ist; der Flüssigammoniaksammelbehälter (13) und der Pufferbehälter (4) durch eine dritte Rücklaufleitung (18) und ein drittes Ventil (19) verbunden sind; und
das Stickstoffspülsystem einen Gas-Flüssigkeitsabscheider (20), einen Entlüftungsmast (21), eine erste Spülleitung (22) und eine zweite Spülleitung (23) umfasst; ein externer Spüleinlass an den mindestens zwei Rücklaufventilen (12) angeordnet ist und die mindestens zwei Rücklaufventile durch die erste Spülleitung (22) und ein viertes Ventil (24) mit dem Gas-Flüssigkeitsabscheider (20) und dem Entlüftungsmast (21) verbunden sind; ein oberer Teil des Flüssigammoniaksammelbehälters (13) durch die zweite Spülleitung (23) und ein fünftes Ventil (25) mit dem Gas-Flüssigkeitsabscheider (20) und dem Entlüftungsmast (21) verbunden ist; und ein Stickstoffspüleinlass (26) mit der zweiten Zufuhrleitung (10) verbunden ist.

2. Flüssigammoniakzufuhr- und -rückgewinnungssystem nach Anspruch 1, **dadurch gekennzeichnet, dass** wenn das Flüssigammoniakzufuhr- und -rückgewinnungssystem den normalen Betrieb einstellt, das in der zweiten Zufuhrleitung (10), der ersten Rücklaufleitung (14) und der zweiten Rücklaufleitung (15) enthaltene Flüssigammoniak durch das Stickstoffspülsystem in den Flüssigammoniaksammelbehälter (13) abgegeben wird; das in der zweiten Zufuhrleitung (10) und der ersten Rücklaufleitung (14) enthaltene Ammoniakgas in den Gas-Flüssigkeitsabscheider (20) abgegeben und dann durch den Entlüftungsmast (21) in die Atmosphäre abgelassen wird.

3. Flüssigammoniakzufuhr- und -rückgewinnungssystem nach Anspruch 1, **dadurch gekennzeichnet, dass** ein erster Flüssigkeitsstandmesser (27) an dem Flüssigammoniaksammelbehälter (13) angeordnet ist; wenn ein eingestellter Flüssigammoniakstand in dem Flüssigammoniaksammelbehälter (13) erreicht ist, das dritte Ventil (19) geöffnet wird und das flüssige Ammoniak in dem Flüssigammoniaksammelbehälter durch die dritte Rücklaufleitung (18) in den Pufferbehälter strömt.

4. Flüssigammoniakzufuhr- und -rückgewinnungssystem nach Anspruch 1, **dadurch gekennzeichnet, dass** der Pufferbehälter (4) mit einem zweiten Flüssigkeitsstandsmesser (27) versehen ist.

5. Flüssigammoniakzufuhr- und -rückgewinnungssystem nach Anspruch 1, **dadurch gekennzeichnet, dass** das Flüssigammoniakzufuhr- und -rückgewinnungssystem ferner ein Wasser-Glykol-Heizsystem umfasst; wobei das Wasser-Glykol-Heizsystem eine Wasser-Glykol-Heizung (29) und eine Wasser-Glykol-Umwälzpumpe (30) umfasst; die Wärme durch eine Mantelwasserheizung (28) erzeugt wird, durch die Wasser-Glykol-Heizung (29) und die Wasser-Glykol-Umwälzpumpe (30) übertragen und an ein Wasser-Glykol-Wärmeübertragungsmedium in der Flüssigammoniakheizung (6) übertragen wird.

6. Flüssigammoniakzufuhr- und -rückgewinnungssystem nach Anspruch 1, **dadurch gekennzeichnet, dass** während des Normalbetriebs des Systems das erste Ventil (16) geschlossen ist und das zweite Ventil (17) geöffnet ist; das flüssige Ammoniak dem ammoniakbetriebenen Motor (11) durch die zweite Zufuhrleitung (10) geliefert wird; das durch den ammoniakbetriebenen Motor (11) zurückgeführte flüssige Ammoniak direkt durch die erste Rücklaufleitung (14) und die zweite Rücklaufleitung (15) in den Pufferbehälter (4) zurückgeführt wird.

7. Flüssigammoniakzufuhr- und -rückgewinnungssystem nach Anspruch 1, **dadurch gekennzeichnet, dass** der Flüssigammoniakbehälter (1) ein Druckbehälter vom Typ C, ein Druckbehälter vom Typ A, ein Druckbehälter vom Typ B oder ein Membranbehälter ist und einer oder mehrere an der Zahl ist.

8. Flüssigammoniakzufuhr- und -rückgewinnungssystem nach Anspruch 1, **dadurch gekennzeichnet, dass** der Stickstoffspüleinlass (26) einen Stickstoffdruck von mehr als 25 bar bereitstellt.

9. Flüssigammoniakzufuhr- und -rückgewinnungssystem nach Anspruch 1, **dadurch gekennzeichnet, dass** eine Anzahl der Niederdruckpumpe (2) in jedem Flüssigammoniakbehälter (1) eins oder mehrere ist; und eine Anzahl der Hochdruckpumpe (5) eins oder mehrere ist.

10. Flüssigammoniakzufuhr- und -rückgewinnungssystem nach Anspruch 1, **dadurch gekennzeichnet, dass** der Gas-Flüssigkeitsabscheider (20) stromaufwärts des Entlüftungsmastes (21) angeordnet ist.

## Revendications

1. Système d'alimentation et de récupération d'ammoniac liquide comprenant un moteur alimenté à l'ammoniac (11) et un système d'alimentation en ammoniac liquide, **caractérisé en ce qu'**il comprend en outre un système de récupération d'ammoniac liquide et un système de purge d'azote ; dans lequel
le système d'alimentation en ammoniac liquide comprend un réservoir d'ammoniac liquide (1) utilisé pour stocker l'ammoniac liquide ; une pompe basse pression (2) est disposée dans le réservoir d'ammoniac liquide (1) et reliée à un réservoir tampon (4) par une première conduite d'alimentation (3) ; l'ammoniac liquide est pompé hors du réservoir d'ammoniac liquide (1) par la pompe basse pression (2), dirigé pour s'écouler à travers la première conduite d'alimentation (3) et dans le réservoir tampon, pompé hors du réservoir tampon par une pompe haute pression (5), dirigé pour s'écouler à travers un réchauffeur d'ammoniac liquide (6), un filtre d'ammoniac liquide (7), une soupape de gaz principale (8), au moins deux soupapes d'alimentation (9), et une seconde conduite d'alimentation (10), et s'écoule par la suite dans un moteur alimenté à l'ammoniac (11) ;
le système de récupération d'ammoniac liquide comprend au moins deux soupapes de reflux (12), un réservoir de collecte d'ammoniac liquide (13), une première conduite de reflux (14) et une deuxième conduite de reflux (15) ; le moteur alimenté à l'ammoniac (11) comprend une sortie d'ammoniac liquide reliée aux au moins deux soupapes de reflux (12) par la première conduite de reflux (14) ; une extrémité de la deuxième conduite de reflux (15) est reliée aux au moins deux soupapes de reflux (12), et l'autre extrémité de la deuxième conduite de reflux (15) est reliée au réservoir de collecte d'ammoniac liquide (13) et au réservoir tampon (4) par une première soupape (16) et une deuxième soupape (17), respectivement ; le réservoir de collecte d'ammoniac liquide (13) et le réservoir tampon (4) sont reliés par une troisième conduite de reflux (18) et une troisième soupape (19) ; et
le système de purge d'azote comprend un séparateur gaz-liquide (20), un mât de ventilation (21), une première conduite de purge (22) et une seconde conduite de purge (23) ; une entrée de purge externe est disposée sur les au moins deux soupapes de reflux (12) et les au moins deux soupapes de reflux sont reliées au séparateur gaz-liquide (20) et au mât de ventilation (21) par la première conduite de purge (22) et une quatrième soupape (24) ; une partie supérieure du réservoir de collecte d'ammoniac liquide (13) est reliée au séparateur gaz-liquide (20) et au mât de ventilation (21) par la seconde conduite de purge (23) et une cinquième soupape (25) ; et une entrée de purge d'azote (26) est reliée à la seconde conduite d'alimentation (10).

2. Système d'alimentation et de récupération d'ammoniac liquide de la revendication 1, **caractérisé en ce que** lorsque le système d'alimentation et de récupération d'ammoniac liquide cesse de fonctionner normalement, l'ammoniac liquide retenu dans la seconde conduite d'alimentation (10), la première conduite de reflux (14) et la deuxième conduite de reflux (15) est libéré dans le réservoir de collecte d'ammoniac liquide (13) par le système de purge d'azote ; l'ammoniac gazeux retenu dans la seconde conduite d'alimentation (10) et la première conduite de reflux (14) est libéré dans le séparateur gaz-liquide (20) puis déchargé dans l'atmosphère à travers le mât de ventilation (21).

3. Système d'alimentation et de récupération d'ammoniac liquide de la revendication 1, **caractérisé en ce qu'**une première jauge de niveau de liquide (27) est disposée sur le réservoir de collecte d'ammoniac liquide (13) ; lorsqu'un niveau d'ammoniac liquide fixé est atteint dans le réservoir de collecte d'ammoniac liquide (13), la troisième soupape (19) est ouverte, et l'ammoniac liquide dans le réservoir de collecte d'ammoniac liquide s'écoule à travers la troisième conduite de reflux (18) dans le réservoir tampon.

4. Système d'alimentation et de récupération d'ammoniac liquide de la revendication 1, **caractérisé en ce que** le réservoir tampon (4) est muni d'une seconde jauge de niveau de liquide (27).

5. Système d'alimentation et de récupération d'ammoniac liquide de la revendication 1, **caractérisé en ce que** le système d'alimentation et de récupération d'ammoniac liquide comprend en outre un système de chauffage eau-glycol ; le système de chauffage eau-glycol comprend un réchauffeur eau-glycol (29) et une pompe de circulation eau-glycol (30) ; la chaleur est produite par un réchauffeur d'eau à chemise (28), transférée à travers le réchauffeur eau-glycol (29) et la pompe de circulation eau-glycol (30) et transférée à un milieu de transfert de chaleur eau-glycol dans le réchauffeur d'ammoniac liquide (6).

6. Système d'alimentation et de récupération d'ammoniac liquide de la revendication 1, **caractérisé en ce que** pendant le fonctionnement normal du système, la première soupape (16) est fermée et la deuxième soupape (17) est ouverte ; l'ammoniac liquide est délivré au moteur alimenté à l'ammoniac (11) par la seconde conduite d'alimentation (10) ; l'ammoniac liquide renvoyé par le moteur alimenté à l'ammoniac (11) est directement renvoyé au réservoir tampon (4) par la première conduite de reflux (14) et la deuxième conduite de reflux (15).

7. Système d'alimentation et de récupération d'ammoniac liquide de la revendication 1, **caractérisé en ce que** le réservoir d'ammoniac liquide (1) est un réservoir de pression de type C, un réservoir de pression de type A, un réservoir de pression de type B ou un réservoir à membrane, et qu'il est au nombre d'un ou plusieurs.

8. Système d'alimentation et de récupération d'ammoniac liquide de la revendication 1, **caractérisé en ce que** l'entrée de purge d'azote (26) fournit une pression d'azote supérieure à 25 bars.

9. Système d'alimentation et de récupération d'ammoniac liquide de la revendication 1, **caractérisé en ce qu'un** nombre de la pompe basse pression (2) dans chaque réservoir d'ammoniac liquide (1) est égal ou supérieur à un ; et un nombre de la pompe haute pression (5) est égal ou supérieur à un.

10. Système d'alimentation et de récupération d'ammoniac liquide de la revendication 1, **caractérisé en ce que** le séparateur gaz-liquide (20) est disposé en amont du mât de ventilation (21).
